# EUROPÄISCHE PATENTSCHRIFT

(11) **EP 1 930 677 B1**
(45) Veröffentlichungstag und Bekanntmachung des Hinweises auf die Patenterteilung: **05.12.2012**
(21) Anmeldenummer: 07025086.5
(22) Anmeldetag: 20.12.2004
(51) Int. Cl.: F27B 1/02, A61C 13/20, G01J 3/46, G01J 3/52, G06F 19/00

(54) **Brennofen**
Furnace
Fourneau

(30) Priorität: 19.01.2004 DE 102004002724
(43) Veröffentlichungstag der Anmeldung: 11.06.2008
(62) Teilanmeldung aus: 04030197.0
(73) Patentinhaber: Ivoclar Vivadent AG, 9494 Schaan (LI)
(72) Erfinder: Grünenfelder, Robert, 9492 Eschen (LI); Rohner, Gottfried, 9450 Altstätten (CH)
(74) Vertreter: Baronetzky, Klaus

(56) Entgegenhaltungen:
- EP-A- 0 891 749
- DE-A1- 19 754 077
- DE-A1- 19 824 497
- US-A1- 2002 012 895
- US-B1- 6 488 503

## Beschreibung

Die Erfindung betrifft einen Brennofen, gemäß dem Oberbegriff von Anspruch 1, sowie ein Verfahren für den Betrieb eines Brennofens für den Dentalbereich, gemäß dem Oberbegriff von Anspruch 22.

Ein derartiger Brennofen ist beispielsweise aus der DE-OS 197 54 077 bekannt. Bei diesem Brennofen werden verschiedene Ofenparameter über Anzeigemittel angezeigt, und zwar in verschiedenen Farben. Hierdurch soll gewährleistet sein, dass der Bediener des dortigen Brennofens für den Dentalbereich die richtige Brennkurve wählt, und es soll beispielsweise optisch umgebend verglichen werden können, wie sich Brennkammertemperatur und Brennobjekttemperatur unterscheiden. Auch ein Soll-/Istwertvergleich ist vorgesehen.

Während die Brenntemperatur für die Bereitstellung des erwünschten Zahnersatzes in hoher Qualität nicht unwichtig ist, werden heutzutage vielfach auch besondere Anforderungen an die Farbgebung des Restaurates gestellt, dass sich harmonisch in den Mund des Patienten einfügen soll. Die Bereitstellung eines entsprechenden Farbtones ist recht aufwendig, denn ein Ausgangs-Farbton ändert sich durch den Brennvorgang. Zudem weisen natürliche Zähne eine spezielle Schichtung auf, und die Realisierung der erwünschten Transluzenz macht die Farbgebung nicht leichter. Um ästhetisch einigermaßen befriedigende Ergebnisse zu erzielen, hat man auch Maltechniken eingesetzt, die in einem nachgeschaltetem Schritt realisiert werden.

Ferner ist es auch bekannt geworen, über spezielle computergestütze Maßnahmen, die erwünschte Zahnfarbe festzulegen und entsprechende Bilddaten dem Zahntechniker zu übermitteln. Hierzu ist es auch bereits vorgeschlagen worden, über eine Kamera eine Aufnahme vorhandener Zähne zu tätigen, die dann für die Bereitstellung der vorgegebenen Zahnfarben verwendet wird. Ein Beispiel für eine derartige Lösung ist die EP-A1 1 043 959.

Bei derartigen Lösungen werden die Zahnfarben nach Gefühl und visuellen Vergleich durch den Zahntechniker oder gegebenenfalls durch den Zahnartz festgelegt, und es werden entsprechende Anweisungen für die Auswahl der Zahfarben mit der entsprechenden Farbkennzeichen (auch z.B. A2, C1 oder dergleichen) vorgegeben. Der Zahn wird dann - in entsprechende Flächenbereiche aufgeteilt und es werden entsprechende Zahnfarben bei der Restauration eingesetzt.

Der Zahntechniker hat die betreffenden Flächenbereiche dann bei der Zahnherstellung in ausgedrucktem Zustand oder in anderer geeigneter Form vor sich und soll nun den entsprechenden Zahn preparieren.

Trotz dieser Hilfsmittel sind häufig die Ergebnisse der Restauration nicht befriedigend. Beispielsweise kann es auch zu Mißverständnissen oder Fehlinterpretationen hinsichtlich der Codierungen der betreffenden Flächenbereiche kommen, insbesondere, wenn die betreffenden Zahnfarben vom Zahnarzt handschriftlich festgelegt werden. Zudem lässt gerade ein Schwarz-/Weiß-Ausdruck die optische Wirkung des zu restaurierenden Zahnes schlecht beurteilen, so dass es insofern stark auf die Erfahrung sowohl des Zahnarztes als auch des Zahntechnikers ankommt, was das Ergebnis der Restauration angeht.

Auch besteht die Gefahr, dass Verwechslungen vorkommen, gerade dann, wenn beispielsweise mehrere Zähne für den gleichen Patienten hergestellt werden sollen, die sich dann in ihrer Farbgebung regelmäßig recht wenig unterscheiden.

Daher liegt der Erfindung die Aufgabe zugrunde, einen Brennofen gemäß dem Oberbegriff von Anspruch 1 bzw. ein Verfahren für den Betrieb eines Brennofens gemäß dem Oberbegriff von Anspruch 16 zu schaffen, der bzw. das ästhetisch verbesserte Ergebnisse gerade auch bei der Herstellung von Zähnen im Frontzahnbereich liefert und dessen Zuverlässigkeit verbessert ist.

Diese Aufgabe wird erfindungsgemäß durch Anspruch 1 bzw.16 gelöst. Vorteilhafte Weiterbildungen ergeben sich aus den Unteransprüchen.

Der erfindungsgemäße Brennofen umfasst eine besondere Anzeigevorrichtung, die Flächenbereiche aufweist, die in ihrer Zusammenschau einen Frontzahn in der Vorderansicht bilden. Die Flächenbereiche weisen je eine in sich einheitliche Farbe, ein in sich einheitliches Muster oder dergleichen auf. Flächenbereiche gleicher Zahnfarbe haben das gleiche optische Merkmal, und es erfolgt insofern eine eindeutige Zuordnung zwischen der erwünschten Zahnfarbe und der zu verwendenden Zahnfarbe, aber auch deren Grenzlinien, also der Festlegung, wo die nächste Zahnfarbe verwendet werden soll.

Bevorzugt erfolgt die Kodierung nach einem an sich bekannten Zahnfarbenschema, und die Anzahl der Flächenbereiche ist ebenfalls begrenzt, so dass beispielsweise fünf verschiedene Zahnfarben für den Frontzahn eingesetzt werden können. Dies schließt nicht aus, dass eine größere Anzahl von Flächenbereichen, wie beispielsweise auch 20 Flächenbereiche auf dem Bildschirm dargestellt werden, so dass sie optisch unterscheidbar dem Zahntechniker die Information liefern, wie der zu restaurierende Zahn genau auszusehen hat.

Der erfindungsgemäße Brennofen zeichnet sich in wesentlicher Weise dadurch aus, dass er eine der Anzeigevorrichtung bzw. Bildschirm zugeordnete Eingabeeinheit aufweist, mit der ein über den Bildschirm bewegbarer Cursor oder eine Zeigereinheit ansteuerbar ist, wobei die Farbinformationen wenigstens eines Flächenbereiches oder Gruppen von Flächenbereichen des Bildschirms, welche innerhalb der Außenkontur des Zahnes liegen, mit einer Vielzahl von in einer Steuereinheit des Brennofens gespeicherten Zahnfarben vergleichbar sind, und wobei die übereinstimmende Zahnfarbe auf dem Bildschirm anzeigbar ist.

Die Bereitstellung dieser Farbinformationen kann in erfindungsgemäß besonders günstiger Weise computergestützt erfolgen. Beispielsweise lässt sich das von der Dentalkamera aufgenommene Bild, beispielsweise des Nachbarzahnes, elektronisch in entsprechende Referenzfarben umsetzen, indem ein Farbähnlichkeitsvergleich je Farbpunkt vorgenommen wird und die entsprechende Farbe wiedergegeben wird.

Erfindungsgemäß besonders ist es dann, dass die betreffenden Daten zusammen mit dem Auftrag an das Dentallabor in geeigneter Weise übermittelt werden, also beispielsweise per Chipkarte, per E-Mail, per Diskette oder beispielsweise auch durch eine hierfür gebrannte CD. Durch die unmittelbare räumliche Nähe der Anzeigevorrichtung an dem Brennofen ist sichergestellt, dass der Zahntechniker gerade beim Brennen, bzw. dem Beschicken des Brennofens den zu restaurierenden Zahns im Blickfeld hat, so dass die Wahrscheinlichkeit, dass es zu Verwechslungen kommt, deutlich reduziert ist. Auf die Richtigkeit etwaiger handschriftlicher Notizen kommt es nicht an, denn die Dentalkamera liefert - entsprechenden Farbabgleich vorausgesetzt - zuverlässig die erwünschten Farben für das Restaurat.

In einer weiteren vorteilhaften Ausgestaltung ist es vorgesehen, dass der Bildschirm in räumlicher Nähe zu dem Brennofen, insbesondere mit diesem in Verbindung stehend, angeordnet ist.

In einer weiteren vorteilhaften Ausgestaltung ist es vorgesehen, dass der Brennofen für das Brennen eines Zahnes bestimmt ist, der auf dem Bildschirm schematisch in Flächenbereiche aufgeteilt dargestellt ist, oder für das Brennen mehrerer Zähne, von denen mindestens einer auf dem Bildschirm in Flächenbereiche aufgeteilt dargestellt ist.

In einer weiteren vorteilhaften Ausgestaltung ist es vorgesehen, dass die Flächenbereiche je unterschiedlichen Zahnfarbenbereichen wenigstens eines zu brennenden Zahnes entsprechen, dass sie je zusammenhängend ausgebildet sind und dass aneinander angrenzende Flächenbereiche gegeneinander übergangslos abgegrenzt sind.

In einer weiteren vorteilhaften Ausgestaltung ist es vorgesehen, dass je in der gleichen Farbe vorliegende Flächenbereiche gleichen Zahnfarben entsprechen und dass die Flächenbereiche zusätzlich mit einer Zahnfarben-Kodierung wie "C1", "D2" oder einer anderen Zahnfarbenkodierung versehen sind, welche auf dem Bildschirm innerhalb oder außerhalb des Flächenbereiches dargestellt sind.

In einer weiteren vorteilhaften Ausgestaltung ist es vorgesehen, dass der Bildschirm mit einer Steuereinheit verbunden ist, die einen Dateneingang aufweist, über welchen ein Bild und/oder eine Datei mit wenigstens den Zahnfarben der einzelnen Farbbereiche des Bildes in die Steuereinheit einspeisbar und in der Steuereinheit abspeisbar ist und dass für die Einspeisung des Bildes und die Datei eine Datenträgerlesegerät und/oder eine Dateneingangsschnittstelle vorgesehen ist.

In einer weiteren vorteilhaften Ausgestaltung ist es vorgesehen, dass sich die Flächenbereiche sich durch unterschiedlich farbige Flächen, Muster wie Schraffuren, Helligkeitswerte oder andere Muster voneinander unterscheiden und dass die Form der Flächenbereiche, die auf dem Bildschirm dargestellt sind, in ihrer Zusammenschau der Form eines herzustellenden Zahns entspricht.

In einer weiteren vorteilhaften Ausgestaltung ist es vorgesehen, dass zu den optisch unterscheidbaren Merkmalen auch Farbverläufe gehören, die mit besonders ausgestalteten Flächenbereichen darstellbar sind und dass in die Steuereinheit multimediale Informationen einspeisbar sind, die dann in Form akustischer Sequenzen wiedergegeben und/oder auf dem Bildschirm in Form bewegter Bilder dargestellt werden können.

In einer modifizierten Ausgestaltung der Erfindung ist es vorgesehen, dass die insbesondere dem zu brennenden Zahn betreffenden Informationen über einen Dateneingang in eine Steuereinheit einlesbar sind und wenigstens ein graphischer Teil der Informationen mit Hilfe der Steuereinheit auf dem Bildschirm darstellbar ist.

In einer weiteren vorteilhaften Ausgestaltung ist es vorgesehen, dass der Dateneingang ein Modem, eine Daten-Import/Export Schnittstelle des Brennofens und/oder ein mit dem Brennofen zusammenwirkendes Datenträgerlesegerät aufweist und dass die Information in Form elektronischer Dateien einlesbar ist

In einer weiteren vorteilhaften Ausgestaltung ist es vorgesehen, dass es sich bei dem graphischen Teil der Information um eine jpg-, bmp-, tif-, pdf-, txt-, xls-, ppt-, avi-, ... usw. -Datei handelt und dass die Größe und/oder Position der graphischen Information auf dem Bildschirm mit Hilfe einer dem Bildschirm zugeordneten Eingabeeinheit veränderbar ist .

In einer weiteren vorteilhaften Ausgestaltung ist es vorgesehen, dass wenigstens die innerhalb der Außenkontur des Zahnes liegenden Flächenbereiche mit Farbinformation hinsichtlich der in diesen Flächenbereichen vorhandenen Zahnfarben des Zahnes versorgbar sind, und dass der Brennofen eine dem Bildschirm zugeordnete Eingabeeinheit aufweist, mit der ein über die Flächenbereiche oder Gruppen von Flächenbereichen des Bildschirms bewegbarer Cursor ansteuerbar ist und dass die Farbinformationen insbesondere als Zahnfarbe (z.B. D2) jeweils nur jenes Flächenbereiches oder jener Gruppe von Flächenbereichen auf dem Bildschirm angezeigt werden auf dem bzw. der sich der Cursor befindet und dass die Farbinformationen wenigstens eines Flächenbereiches oder Gruppen von Flächenbereichen des Bildschirms, welche innerhalb der Außenkontur des Zahnes liegen mit einer Vielzahl von in der Steuereinheit des Brennofens gespeicherten Zahnfarben vergleichbar sind und die übereinstimmende Zahnfarbe auf dem Bildschirm anzeigbar ist und.dass ein bestehender Brennofen mit einer erfindungsgemäßen Anzeigevorrichtung mit mindestens zwei Flächenbereichen nachrüstbar ist, insbesondere unter Austausch der Steuereinheit des Brennofens

Bei einem erfindungsgemäßen Verfahren für den Betrieb eines Brennofens für den Dentalbereich, der eine Anzeigevorrichtung hat, ist es vorgesehen, dass die Anzeigevorrichtung ein Bildschirm ist und dass auf dem Bildschirm Flächenbereiche dargestellt werden, die zusammen gesehen im Wesentlichen mindestens einen Zahn in Front- und/oder Seitenansicht entsprechen und dass die Flächenbereiche gegeneinander abgegrenzt sind und jeder Flächenbereich ein unterschiedliches Merkmal, wie ein Muster, eine Farbe, eine Helligkeit oder dergleichen, aufweist und das jedes Merkmal einer Zahnfarbe des herzustellenden Zahns entspricht

In einer weiteren vorteilhaften Ausgestaltung ist es vorgesehen, dass bei der Herstellung einer Datei für die Zahnfarbenwiedergabe der Zahn in Flächenbereiche mit ähnlicher Zahnfarbe aufgeteilt wird, wobei die Flächenbereiche aneinander angrenzen und dass in die Datei zusätzlich zu den in Grobdarstellung vorgegebenen Zahnfarbenbereichen patientenspezifische Daten abgespeichert sind und dass ein Bild mit der Darstellung wenigstens eines Zahnes und/oder die Datei vom Zahnarzt oder Zahntechniker in das Labor übermittelt werden, in dem der Brennofen aufgestellt ist.

In einer weiteren vorteilhaften Ausgestaltung ist es vorgesehen, dass das Bild und/oder die Datei über eine Datenschnittstelle und/oder ein Datenträgerlesegerät in eine Steuereinheit des Brennofens einlesbar ist und dass mit den Flächenbereichen in kodierter Form, also durch Farben, Schraffuren oder dergleichen, optisch unterscheidbare Merkmale des Nachbarzahns zu dem zu restaurierenden Zahn darstellbar sind und dass der Brennofen eine dem Bildschirm zugeordnete Eingabeeinheit aufweist, die einen Cursor steuert und dass die Zahnfarben der optisch unterscheidbaren Merkmale angezeigt werden, wenn der Cursor sich in einem der mindestens zwei Flächenbereich befindet.

In einer weiteren vorteilhaften Ausgestaltung ist es vorgesehen, dass die Zahnfarben jedens Flächenbereiches dann angezeigt wird, in dem sich der Cursor befindet und dass die Steuereinheit eine Vergleichseinheit aufweist, und dass in der Steuereinheit eine Vielzahl von Zahnfarben abgespeichert sind und dass die betreffende Zahnfarbe dann angezeigt wird, wenn ein Cursor auf dem Bildschirm sich in einem Flächenbereich befindet, der die betreffende Zahnfarbe anzeigt und dass mit dem Cursor mehrere Flächenbereiche als Gruppe zusammenfassbar sind, die Durchschnittsfarbe aller Flächenbereiche ermittelt und mit den abgespeicherten Zahnfarben verglichen sowie die betreffende Zahnfarbe angezeigt wird.

In einer weiteren vorteilhaften Ausgestaltung ist es vorgesehen, dass die Eingabeeinheit eine Zoom- und/oder Bewegungseinrichtung beinhaltet, mit der die Position des Bildes auf dem Bildschirm sowie Größe des auf dem Bildschirm dargestellten Bildes verändert und dass mit der Eingabeeinheit eine Art Rahmen um mehrere Bildpunkte oder Gruppen von Bildpunkten ziehbar ist, die Durchschnittsfarbe innerhalb dieses Rahmens ermittelt und mit den gespeicherten Zahnfarben verglichen wird und die übereinstimmende Zahnfarbe auf dem Bildschirm angezeigt wird.

Weitere Vorteile, Einzelheiten und Merkmale der Erfindung ergeben sich aus der nachfolgenden Beschreibung zweier Ausführungsbeispiele anhand der Zeichnung.

Es zeigen:
- Fig. 1: eine schematische perspektivische Ansicht eines erfindungsgemäßen Brennofens in einer ersten Ausführungsform;
- Fig. 2: eine Ansicht eines Details eines erfindungsgemäßen Brennofens, nämlich der Anzeigevorrichtung;
- Fig. 3: eine Ansicht der Anzeigevorrichtung gemäß Fig. 2, jedoch mit anderen Flächenbereichen;
- Fig. 4: eine schematische Ansicht einer weiteren Ausführungsform eines erfindungsgemäßen Brennofens; und
- Fig. 5: eine vergrößerte Ansicht eines Teils des Brennofens in der Ausführungsform gemäß Fig. 4.

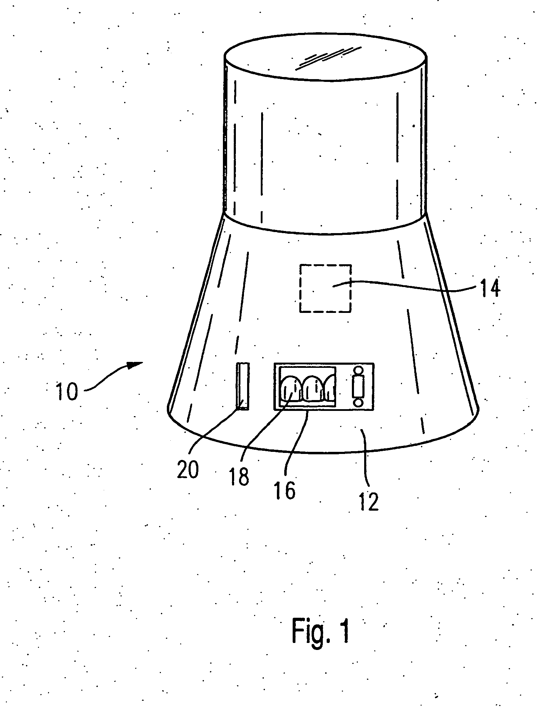

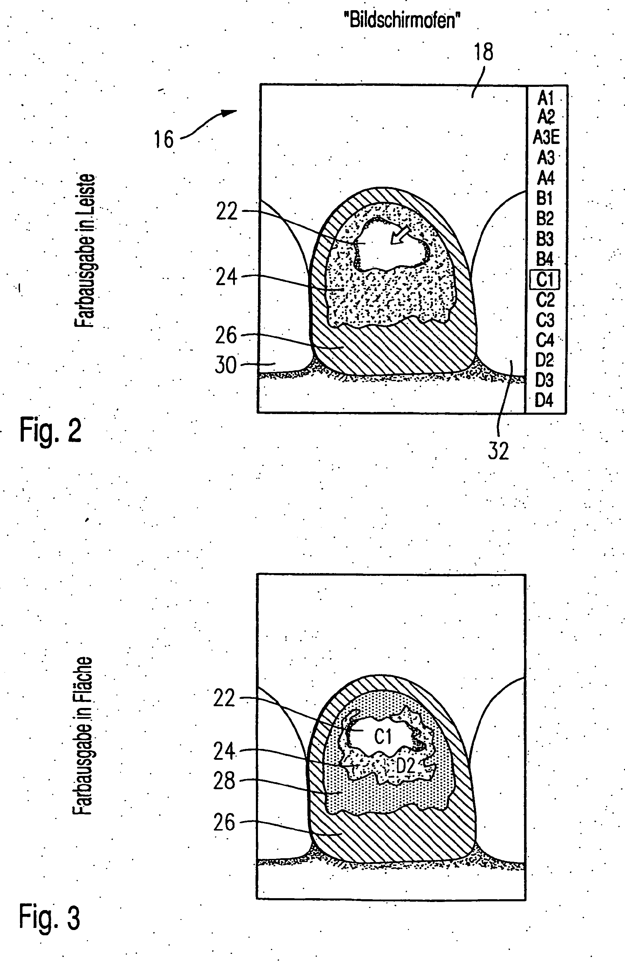

Der in Fig. 1 dargestellte Brennofen 10 weist Bedienelemente 12 auf, die auf eine schematisch angedeutete Steuervorrichtung 14 wirken. Die Steuervorrichtung dient der Steuerung unter anderem der Brennkurve nach den eingestellten Brennkurven. Sie stellt auch die Informationen bereit, die für den Zahntechniker sichtbar auf einer erfindungsgemäßen Anzeigevorrichtung 16 anzeigbar sind. Die Anzeigevorrichtung 16 zeigt die Umrisse eines Frontzahnes 18 und Flächenbereiche, die erfindungsgemäß in besonderer Weise ausgestaltet sind. Die Flächenbereiche selbst sind in den Fig. 2 und 3 dargestellt.

Ferner weist der Brennofen 10 eine geeignete Eingabevorrichtung auf. In dem dargestellten Ausführungsbeispiel ist der Leseschlitz 20 einer Chipkarte dargestellt, die zusammen mit dem Auftrag für das Brennen der erwünschten Restauration dem Zahntechniker zur Verfügung gestellt wird.

Es versteht sich, dass anstelle dessen andere Arten der Datenübermittlung möglich sind.

In Fig. 2 ist der Frontzahn 18 auf der Anzeigevorrichtung 16 im Einzelnen dargestellt. In dem dargestellten Ausführungsbeispiel weist er drei Flächenbereiche 22, 24 und 26 auf, die je im Wesentlichen zusammenhängend sind und unterschiedliche Farben des Zahnes wiedergeben. Hierzu ist der Flächenbereich 22 mit der Angabe "C1" kodiert, der der Farbtonwiedergabe oder Shade eines bekannten Farbschlüssels entspricht. Für den Flächenbereich 24 ist der Farbton D2 vorgegeben und für den Flächenbereich 26 der Farbton E1.

Auf der Anzeigevorrichtung erfolgt die Farbtonwiedergabe durch entsprechende Helligkeitsabstufungen oder Schraffierungen. Gemäß einer modifizierten Ausgestaltung sind unterschiedliche Farben für jeden Flächenbereich vorgesehen, wobei es sich versteht, dass diese Farbe nicht der tatsächlichen Zahnfarbe entspricht, sondern vielmehr eine deutliche Unterscheidung ermöglicht.

Ein komplexerer Aufbau von Zahnflächenbereichen ist aus Fig. 3 ersichtlich. Hier ist neben den drei Flächenbereichen 22, 24 und 26 ein vierter Flächenbereich 28 ausgebildet, wobei jeder Flächenbereich eine asymmetrische Form, die den natürlichen Farbverlauf annähert, aufweist und nur teilweise zusammenhängende Flächenbereiche vorliegen. Sogenannte Farbinseln sind durch geeignete optische Merkmale wie Schraffuren oder dergleichen als zusammengehörig gekennzeichnet.

Der zu restaurierende Zahn ist auf der Anzeigevorrichtung 16 in der Seitenansicht, also von vorne, vollständig zu sehen. Die mesial bzw. distal je benachbarten Frontzähne 30 und 32 sind je in einem kleinen Bereich abgeschnitten zu erkennen, wobei an dieser Stelle keine Flächenbereiche dargestellt sind.

Ein entsprechendes Bild lässt sich basierend auf dem von einer Dentalkamera aufgenommenen Bild nach entsprechender Bildbearbeitung zur Bereitstellung des erwünschten zu restaurierenden Zahns elektronisch unmittelbar bereitstellen, indem Schwellenwerte für jeden Farbton angegeben werden, die entsprechende Flächen bereitstellen.

Es versteht sich, dass zusammen mit der Übermittlung von Farbtonkarten auf die erfindungsgemäße Anzeigevorrichtung über die entsprechende Chipkarte auch die zugehörigen Patientendaten, einschließlich der genauen Identifikation des zu restaurierenden Zahns, übermittelt werden können.

In besonders günstiger Ausgestaltung der Erfindung ist es vorgesehen, die Steuervorrichtung 14 mit einer Vergleichsvorrichtung auszustatten, die dann auch mit den Rohdaten der Dentalkamera nach entsprechender Aufbereitung zur Herstellung der Bilddaten den zu restaurierenden Zahn gefüttert werden kann. Die Vergleichsvorrichtung erzeugt dann basierend auf Referenztabellen der vorhandenen Zahnfarben die erfindungsgemäßen Flächenbereiche, die dann auf der Anzeigevorrichung 16 erfindunggemäß dargestellt werden.

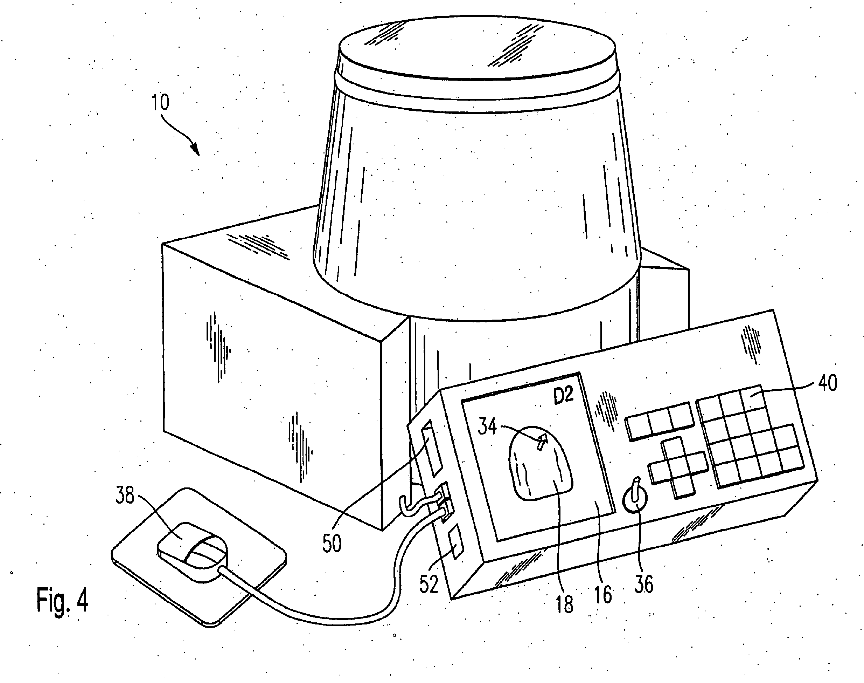

Der in Fig. 4 dargestellte Brennofen 10 weist einen Bildschirm als Anzeigevorrichtung 16 auf, der im Unterschied zu der Ausführungsform gemäß Fig. 1 separat aufgestellt ist, jedoch dem Brennofen benachbart ist. Auch hier ist ein Bild eines Frontzahnes 18 zu ersehen, das wiederum in Flächenbereiche aufgeteilt ist, auch wenn dies in Fig. 4 nicht dargestellt ist.

Auf dem Bildschirm befindet sich bei dieser Ausführungsform auch eine Zeigereinheit oder ein Cursor 34, der über eine Art Joystick 36 oder eine Maus 38 steuerbar ist. Wenn über die Steuerung mit dem Joystick 36 oder der Maus 38 ein bestimmter Flächenbereich angewählt ist, wird die zutreffende Zahnfarbe, beispielsweise "D2", wie es auf dem Bildschirm 16 dargestellt ist, angezeigt.

Über eine Tastatur lassen sich bestimmte Flächen wählen, wobei die Steuerung so vorgesehen ist, dass man eine Taste gedrückt halten kann und dann mit dem Cursor einen Rahmen auf dem Bildschirm erzeugt wird.

Ferner weist der erfindungsgemäße Brennofen einen DatenträgerLesegerät 50 und einen Dateneingang 52 auf, über den bzw. über die geeignete Dateien zur Übermittlung der gewünschten Information dem Brennofen zuleitbar sind.

Auch ist es möglich, die Schnittstelle 52 bidirektional auszubilden, um beispielsweise die erfolgreiche Datenübertragung zu bestätigen.

In einer weiter modifizierten Ausgestaltung ist es vorgesehen, auch auf dem Brennofen-Bildschirm eine Farbanalyse durch Farbvergleich durchzuführen. Hierzu lässt sich bevorzugt ein von einer Digitalkamera erstelltes Foto in digitaler Form über den Dateneingang 52 einlesen. Die Farbanalyse erfolgt dann durch Vergleich mit im Brennofen gespeicherten Zahnfarben.

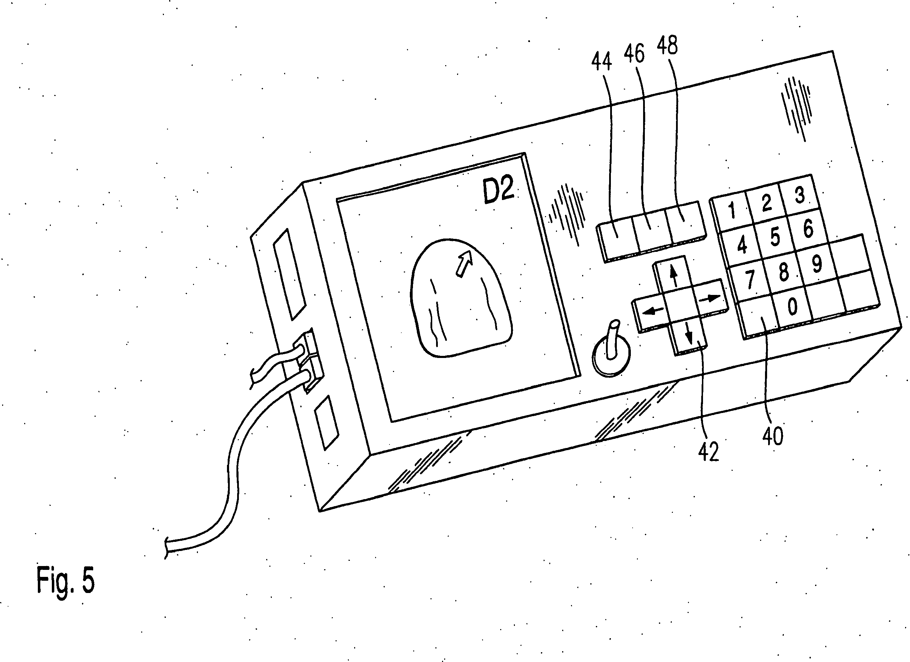

Aus Fig. 5 ist die Einheit aus Bildschirm, Tastatur und Zeigereinheit etwas vergrößert ersichtlich. Die Tastatur 40 weist auch Cursortasten 42 zur wahlweisen Bedienung auf, und je Tasten für "Vergrößerung" 44, "Verkleinerung" 46 und für "Bildschirmausschnitt verschieben" 48. Mit derartigen Tasten lässt sich beliebig auch eine Farbe festlegen bzw. eine Art Bearbeitung vornehmen.

Der erfindungsgemäße Bildschirm lässt sich bei Bedarf auch nachrüsten, wobei es günstig ist, die Steuereinheit des Brennofens gleich gegen eine für die Ansteuerung des Bildschirms geeignete Steuereinheit auszutauschen.

## Patentansprüche

1. Brennofen für dentale Restaurationsteile, mit einer Anzeigevorrichtung mit einem Bildschirm (16) zur Anzeige von Informationen, wobei
der Bildschirm (16) mindestens zwei, insbesondere wenigstens drei Flächenbereiche (22, 24, 26) aufweist, mit denen optisch unterscheidbare Merkmale, wie unterschiedliche Farben, Muster oder Strukturen, wiedergebbar sind,
die Flächenbereiche (22, 24, 26) sich zusammen zu wenigstens einem Zahn in Front- und/oder Seitenansicht ergänzen,
der Brennofen (10) eine dem Bildschirm (16) zugeordnete Eingabeeinheit aufweist, mit der ein über den Bildschirm (16) bewegbarer Cursor (34) oder eine Zeigereinheit ansteuerbar ist, wodurch wenigstens ein Flächenbereich oder eine Gruppe von Flächenbereichen (22, 24, 26) anwählbar ist, und wobei
die Farbinformationen des angewählten Flächenbereiches oder der angewählten Gruppen von Flächenbereichen (22, 24, 26) des Bildschirms (16) welche innerhalb der Außenkontur des Zahnes liegen, mit einer Vielzahl von in der Steuereinheit des Brennofens (10) gespeicherten Zahnfarben vergleichbar sind, wobei die übereinstimmende Zahnfarbe auf dem Bildschirm (16) anzeigbar ist.

2. Brennofen nach Anspruch 1, **dadurch gekennzeichnet, dass** die Zeigereinheit oder der Cursor (34) über einen Joystick (36) oder eine Maus (38) steuerbar ist.

3. Brennofen nach Anspruch 1 oder 2, **dadurch gekennzeichnet, dass** die Zeigereinheit oder der Cursor (34) über eine Tastatur (40) steuerbar ist.

4. Brennofen nach Anspruch 3, **dadurch gekennzeichnet, dass** die Eingabeeinheit weiterhin eine Zoom- und/oder Bewegungseinrichtung aufweist, mit der die Position der auf dem Bildschirm (40) dargestellten grafischen Informationen sowie deren Grösse veränderbar ist.

5. Brennofen nach einem der vorhergehenden Ansprüche, **dadurch gekennzeichnet, dass** der Cursor (34) über die Flächenbereiche (22, 24, 26) des Bildschirms bewegbar ist.

6. Brennofen nach einem der vorhergehenden Ansprüche, **dadurch gekennzeichnet, dass** mit der Zeigereinheit oder dem Cursor (40) auf dem Bildschirm (40) Flächen wählbar und/oder Rahmen erzeugbar sind.

7. Brennofen nach einem der vorhergehenden Ansprüche, **dadurch gekennzeichnet, dass** mit der Zeigereinheit oder dem Cursor (34) mehrere Flächenbereiche als Gruppe zusammenfassbar sind.

8. Brennofen nach einem der vorhergehenden Ansprüche, **dadurch gekennzeichnet, dass** die Farbinformationen insbesondere als Zahnfarbe wie "C1", "D2" oder eine andere Zahnfarbenkodierung jeweils nur jenes Flächenbereiches oder jener Gruppe von Flächenbereichen (22, 24, 26), auf dem bzw. der sich der Cursor (34) befindet, auf dem Bildschirm (16) anzeigbar sind.

9. Brennofen nach einem der vorhergehenden Ansprüche, **dadurch gekennzeichnet, dass** die Durchschnittsfarbe der zu der Gruppe zusammengefassten mehreren Flächenbereiche ermittelt sowie angezeigt wird.

10. Brennofen nach einem der vorhergehenden Ansprüche, **dadurch gekennzeichnet, dass** durch die Tasten der Tastatur (40) beliebig eine Farbe festlegbar und/oder eine Bearbeitung vornehmbar ist.

11. Brennofen nach einem der vorhergehenden Ansprüche, **dadurch gekennzeichnet, dass** die Information in Form elektronischer Dateien einlesbar ist.

12. Brennofen nach Anspruch 11 , **dadurch gekennzeichnet, dass** die Datei, die in die Steuereinheit einspeisbar ist, multimediale Informationen aufweist, die in Form akustischer Sequenzen und/oder auf dem Bildschirm in Form bewegter Bilder wiedergebbar sind.

13. Brennofen nach Anspruch 11 oder 12, **dadurch gekennzeichnet, dass** es sich bei dem graphischen Teil der Information um eine jpg-, bmp-, tif-, pdf-, txt-, xls-, ppt-, avi-, ... usw. - Datei handelt.

14. Brennofen nach einem der vorhergehenden Ansprüche, **dadurch gekennzeichnet, dass** der Bildschirm (16) nachrüstbar ist.

15. Brennofen nach einem der vorhergehenden Ansprüche, **dadurch gekennzeichnet, dass** die Steuereinheit des Brennofens gegen eine für die Ansteuerung des Bildschirms (16) geeignete Steuereinheit austauschbar ist.

16. Verfahren für den Betrieb eines Brennofens für den Dentalbereich, der eine Anzeigevorrichtung hat, wobei
die Anzeigevorrichtung (16) ein Bildschirm (16) ist,
auf dem Bildschirm (16) Flächenbereiche (22, 24, 26) dargestellt werden, die zusammen gesehen im Wesentlichen mindestens einen Zahn in Front- und/oder Seitenansicht entsprechen,
die Flächenbereiche (22, 24, 26) gegeneinander abgegrenzt sind,
jeder Flächenbereich (22, 24, 26) ein unterschiedliches Merkmal, wie ein Muster, eine Farbe, eine Helligkeit oder dergleichen, aufweist,
jedes Merkmal einer Zahnfarbe des herzustellenden Zahns entspricht,
der Brennofen eine dem Bildschirm (16) zugeordnete Eingabeeinheit aufweist, mit der ein Cursor (34) oder eine Zeigereinheit über die Flächenbereiche des Bildschirms bewegt wird, und
die Farbinformationen wenigstens eines Flächenbereiches oder Gruppen von Flächenbereichen (22, 24, 26) des Bildschirms (16), welche innerhalb der Aussenkontur des Zahnes liegen, mit einer Vielzahl von in einer Steuereinheit des Brennofens (10) gespeicherten Zahnfarben vergleichbar sind, wobei die übereinstimmende Zahnfarbe auf dem Bildschirm (16) anzeigbar ist.

17. Verfahren nach Anspruch 16, **dadurch gekennzeichnet, dass** bei der Herstellung einer Datei für die Zahnfarbenwiedergabe der Zahn in Flächenbereiche (22, 24, 26) mit ähnlicher Zahnfarbe aufgeteilt wird, wobei die Flächenbereiche (22, 24, 26) aneinander angrenzen.

18. Verfahren nach einem der Ansprüche 16 bis 7, **dadurch gekennzeichnet,**
**dass** in die Datei zusätzlich zu den in Grobdarstellung vorgegebenen Zahnfarbenbereichen patientenspezifische Daten abgespeichert werden, und
**dass** ein Bild mit der Darstellung wenigstens eines Zahnes und/oder die Datei vom Zahnarzt oder Zahntechniker in das Labor übermittelt werden, in dem der Brennofen (10) aufgestellt ist.

19. Verfahren nach Anspruch 18, **dadurch gekennzeichnet, dass** die Zahnfarbe jedes Flächenbereiches, in dem sich der Cursor (34) befindet, angezeigt wird.

20. Verfahren nach einem der Ansprüche 16 bis 19, **dadurch gekennzeichnet,**
**dass** die Steuereinheit eine Vergleichseinheit aufweist, und
**dass** in der Steuereinheit eine Vielzahl von Zahnfarben abgespeichert sind,
wobei die betreffende Zahnfarbe dann angezeigt wird, wenn ein Cursor (34) auf dem Bildschirm (16) sich in einem Flächenbereich (22, 24, 26) befindet, der die betreffende Zahnfarbe anzeigt.

21. Verfahren nach Anspruch 20, **dadurch gekennzeichnet, dass**
mit dem Cursor (34) mehrere Flächenbereiche (22, 24, 26) als Gruppe zusammenfassbar sind, die Durchschnittsfarbe aller Flächenbereiche (22, 24, 26) ermittelt und
mit den abgespeicherten Zahnfarben verglichen sowie die betreffende Zahnfarbe angezeigt wird.

22. Verfahren nach einem der Ansprüche 20 bis 21, **dadurch gekennzeichnet, dass** die Eingabeeinheit eine Zoom- und/oder Bewegungseinrichtung beinhaltet, mit der die Position des Bildes auf dem Bildschirm (16) sowie die Grösse des auf dem Bildschirm (16) dargestellten Bildes verändert wird.

23. Verfahren nach einem der Ansprüche 16 bis 22, **dadurch gekennzeichnet, dass**
mit der Eingabeeinheit eine Art Rahmen um mehrere Bildpunkte oder Gruppen von Bildpunkten ziehbar ist, die Durchschnittsfarbe innerhalb dieses Rahmens ermittelt und
mit den gespeicherten Zahnfarben verglichen wird, wobei die übereinstimmende Zahnfarbe auf dem Bildschirm (16) angezeigt wird.

## Claims

1. An oven for dental restoration parts, comprising a display device with an image screen (16) for displaying information, wherein
the image screen (16) is provided with at least two, in particular at least three, surface areas (22, 24, 26) with which optically distinguishable features, such as different colors, patterns or structures can be displayed,
the surface areas (22, 24, 26) together form a front and/or side view of at least one tooth, the oven (10) includes an input unit that is associated with the image screen (16) with which a cursor (34) that is moveable over the image screen (16) or a pointer unit can be controlled which makes possible to select at least one surface area or a group of surface areas (22, 24, 26), and wherein
the color information of the selected surface area or the selected group of surace areas (22, 24, 26) of the image screen (16) which are within the outer contour of the tooth can be compared to a plurality of tooth colors stored in the control unit of the oven (10), wherein the matching tooth color can be displayed on the image screen (16).

2. An oven according to claim 1, wherein the pointer unit or the cursor (34) can be controlled via a joystick (36) or a mouse (38).

3. An oven according to claim 1 or 2, wherein the pointer unit or the cursor (34) can be controlled via a keyboard (40).

4. An oven according to claim 3, wherein the input unit further comprises a zoom and/or movement device with which the position of the images illustrated on the image screen (40), as well as their size, can be varied.

5. An oven according to any of the foregoing claims, wherein the cursor (34) can be moved over the surface areas (22, 24, 26) of the image screen.

6. An oven according to any of the foregoing claims, wherein surfaces can be selected and/or frames can be produced using the pointer unit or the cursor (40) on the image screen (40).

7. An oven according to any of the foregoing claims, wherein the pointer unit or the cursor (34) can summarize several surface areas as a group.

8. An oven according to any of the foregoing claims, wherein the color information, in particular as a tooth color such as "C1 ", "D2" or another tooth color encoding, of that surface area or that group of surface areas (22, 24, 26) each, on which the cursor (34) is positioned, can be displayed on the image screen (16).

9. An oven according to any of the foregoing claims, wherein the average color of the several surface areas summarized as the group is determined as well as displayed.

10. An oven according to any of the foregoing claims, wherein any desired color can be determined and/or any desired processing can be carried out using the keys of the keyboard (40).

11. An oven according to any of the foregoing claims, wherein information is readable in the form of electronic files.

12. An oven according to claim 11, wherein the file which can be fet into the control unit comprises multimedial information that can be displayed in the form of acoustical sequences and/or can be illustrated on the image screen in the form of moving images.

13. An oven according to claim 11 or 12, wherein the graphic portion of the information is a jpg, bmp, tif, pdf, txt, xls, ppt, avi, etc. file.

14. An oven according to any of the foregoing claims, wherein the image screen (16) can be retro-fitted.

15. An oven according to any of the foregoing claims, wherein the control unit of the oven can be replaced by a control unit suitable for the control of the image screen (16).

16. A method of operating an oven for use in the dental field, comprising a display device, wherein
the display device (16) is am image screen (16),
on the image screen (16) surface areas (22, 24, 26) are displayed which together substantially form at least one tooth in front and/or side view,
the surface areas (22, 24, 26) are demarcated against each other,
each surface area (22, 24, 26) comprises a different feature, such as a pattern, a color, a brightness or the like,
each feature corresponds to a tooth color of the tooth to be produced,
the oven comprises an input unit assigned to the image screen (16) with which a cursor (34) or a pointer unit is moved over the surface areas of the image screen, and
the color information of at least one surface area or groups of surface areas (22, 24, 26) of the image screen (16), which are located within the outer contour of the tooth, can be compared to a plurality of tooth colors stored in a control unit of the oven (10), wherein the matching color can be displayed on the image screen (16).

17. A method according to claim 16, wherein, in the creation of a file for the reproduction of the tooth color, the tooth is divided into surface areas (22, 24, 26) having similar tooth colors, wherein the surface areas (22, 24, 26) adjoin one another.

18. A method according to claim 16 to 17, wherein
in addition to tooth color areas given in rough illustration, patient-specific data is stored in the file, and
wherein an image illustrating at least one tooth, and/or the file from a dentist or dental technician, are transmitted to the dental laboratory in which the oven (10) is positioned.

19. A method according to claim 18, wherein the tooth color of each surface area in which the cursor (34) is found is displayed.

20. A method according to claim 16 to 19, wherein
the control unit is provided with a comparator, and
wherein in the control unit a plurality of tooth colors is stored
wherein the pertaining tooth color is displayed when a cursor (34) on the image screen (16) is disposed in a surface area (22, 24, 26) that displays the pertaining tooth color.

21. A method according to claim 20, wherein
the cursor (34) can summarize several surface areas (22, 24, 26) as a group, the average color of all surface areas (22, 24, 26) is determined and
compared to the stored tooth colors, and the pertaining tooth color is displayed.

22. A method according to claim 20 to 21, wherein the input unit comprises a zoom and/or movement device with which the position of the image on the image screen (16) as well as the size of the image displayed on the image screen (16) is varied.

23. A method according to claims 16 to 22, wherein
a type of frame can be achieved with said input unit about several image points or groups of image points, wherein the average color is determined within this frame and
is compared to the tooth colors stored, wherein the coinciding tooth color is displayed on the image screen (16).

## Revendications

1. Fourneau pour des pièces de restauration dentaire, avec un dispositif d'affichage comprenant un écran (16) pour l'affichage d'informations, l'écran (16) présentant au moins deux, en particulier au moins trois zones de surface (22, 24, 26) avec lesquelles des caractéristiques optiquement non discernables, comme des couleurs, motifs ou structures différents, peuvent être reproduites,
les zones de surface (22, 24, 26) se complétant pour donner au moins une dent en vue de front et/ou de côté,
le fourneau (10) présentant une unité d'entrée affectée à l'écran (16), avec laquelle il est possible de piloter un curseur (34) ou une unité de pointage déplaçable sur l'écran (16), ce qui permet de sélectionner au moins une zone de surface ou un groupe de zones de surface (22, 24, 26), et
les informations de couleur de la zone de surface sélectionnée ou des groupes de zones de surface (22, 24, 26) sélectionnés de l'écran (16) qui sont situées à l'intérieur du contour extérieur de la dent pouvant être comparées à une multiplicité de couleurs de dent enregistrées dans l'unité de commande du fourneau (10), la couleur de dent qui coïncide pouvant être affichée sur l'écran (16).

2. Fourneau selon la revendication 1, **caractérisé en ce que** l'unité de pointage ou le curseur (34) peut être commandé(e) par le biais d'une manette de jeu (36) ou d'une souris (38).

3. Fourneau selon la revendication 1 ou 2, **caractérisé en ce que** l'unité de pointage ou le curseur (34) peut être commandé(e) par le biais d'un clavier (40).

4. Fourneau selon la revendication 3, **caractérisé en ce que** l'unité d'entrée présente en outre un équipement de zoom et/ou de déplacement permettant de modifier la position des informations graphiques représentées sur l'écran (16) ainsi que leur taille.

5. Fourneau selon l'une des revendications précédentes, **caractérisé en ce que** le curseur (34) peut être déplacé sur les zones de surface (22, 24, 26) de l'écran.

6. Fourneau selon l'une des revendications précédentes, **caractérisé en ce que**, avec l'unité de pointage ou le curseur (34), il est possible, sur l'écran (16), de produire des surfaces et/ou de produire des cadres au choix.

7. Fourneau selon l'une des revendications précédentes, **caractérisé en ce que**, avec l'unité de pointage ou le curseur (34), il est possible de rassembler plusieurs zones de surface en un groupe.

8. Fourneau selon l'une des revendications précédentes, **caractérisé en ce que** les informations de couleur peuvent être affichées sur l'écran (16) en particulier en tant que couleur de dent telle que «C1 », « D2 » ou un autre codage de couleur de dent respectivement uniquement de la zone de surface ou du groupe de zones de surface (22, 24, 26) sur laquelle ou sur lequel se trouve le curseur (34).

9. Fourneau selon l'une des revendications précédentes, **caractérisé en ce que** la couleur moyenne des plusieurs zones de surface réunies en groupe est déterminée ainsi qu'affichée.

10. Fourneau selon l'une des revendications précédentes, **caractérisé en ce que**, au moyen des touches du clavier (40), il est possible librement de stipuler une couleur et/ou d'effectuer un traitement.

11. Fourneau selon l'une des revendications précédentes, **caractérisé en ce que** l'information peut être mise en mémoire sous forme de fichiers électroniques.

12. Fourneau selon la revendication 11, **caractérisé en ce que** le fichier qui peut être introduit dans l'unité de commande présente des informations multimédias qui peuvent être reproduites sous forme de séquences acoustiques et/ou sur l'écran sous forme d'images animées.

13. Fourneau selon la revendication 11 ou 12, **caractérisé en ce que**, concernant la partie graphique de l'information, il s'agit d'un fichier jpg, bmp, tif, pdf, txt, xls, ppt, avi, à, etc.

14. Fourneau selon l'une des revendications précédentes, **caractérisé en ce que** l'écran (16) peut être mis à niveau ultérieurement.

15. Fourneau selon l'une des revendications précédentes, **caractérisé en ce que** l'unité de commande du fourneau peut être remplacée par une unité de commande appropriée pour le pilotage de l'écran (16).

16. Procédé de fonctionnement d'un fourneau pour le domaine dentaire qui a un dispositif d'affichage, le dispositif d'affichage (16) étant un écran (16),
des zones de surface (22, 24, 26) étant affichées sur l'écran (16) et correspondant, quand elles sont vues ensemble, essentiellement à au moins une dent en vue de front et/ou de côté,
les zones de surface (22, 24, 26) étant délimitées les unes par rapport aux autres, chaque zone de surface (22, 24, 26) présentant une caractéristique différente, comme un motif, une couleur, une clarté ou similaire, chaque caractéristique correspondant à une couleur de dent de la dent à réaliser,
le fourneau présentant une unité d'entrée affectée à l'écran (16) et avec laquelle un curseur (34) ou une unité de pointage peut être déplacé(e) sur les zones de surface de l'écran, et les informations de couleur d'au moins une zone de surface ou de groupes de zones de surface (22, 24, 26) de écran (16) qui sont situées à intérieur du contour extérieur de la dent pouvant être comparées à une multiplicité de couleurs de dent enregistrées dans une unité de commande du fourneau (10), la couleur de dent qui coïncide pouvant être affichée sur l'écran (16).

17. Procédé selon la revendication 16, **caractérisé en ce que**, lors de la réalisation d'un fichier pour la reproduction de couleur de la dent, la dent est placée dans des zones de surface (22, 24, 26) de couleur de dent identique, les zones de surface (22, 24, 26) étant juxtaposées.

18. Procédé selon l'une des revendications 16 à 17, **caractérisé en ce que**,
en plus des zones de couleur de dent prédéfinies en représentation grossière, des données spécifiques au patient sont enregistrées dans le fichier, et
**en ce qu'**une image avec la représentation d'au moins une dent et/ou le fichier sont transmis par le dentiste ou le prothésiste dentaire au laboratoire dans lequel est installé le fourneau (10).

19. Procédé selon la revendication 8, **caractérisé en ce que** la couleur de dent de chaque zone de surface dans laquelle se trouve le curseur (34) est affichée.

20. Procédé selon l'une des revendications 16 à 19, **caractérisé en ce que** l'unité de commande présente une unité de comparaison, et
**en ce qu'**une multiplicité de couleurs de dent sont enregistrées dans l'unité de commande, la couleur de dent concernée étant ensuite affichée quand un curseur (34) se trouvé sur l'écran (16) dans une zone de surface (22, 24, 26) qui affiche la couleur de dent concernée.

21. Procédé selon la revendication 20, **caractérisé en ce que**,
avec le curseur (34), plusieurs zones de surface (22, 24, 26) peuvent être rassemblées en un groupe, la couleur moyenne de toutes les zones de surface (22, 24, 26) est déterminée et
comparée aux couleurs de dent enregistrées, et la couleur de dent concernée est affichée.

22. Procédé selon l'une des revendications 20 à 21, **caractérisé en ce que** l'unité d'entrée contient un équipement de zoom et/ou de déplacement permettant de modifier la position de l'image sur l'écran (16) ainsi que la taille de l'image représentée sur l'écran (16).

23. Procédé selon l'une des revendications 16 à 22, **caractérisé en ce que**,
avec l'unité d'entrée, une espèce de cadre peut être traîné sur plusieurs points d'image ou groupes de points d'image, la couleur moyenne à l'intérieur de ce cadre est déterminée et est comparée aux couleurs de dent enregistrées, la couleur de dent qui coïncide étant affichée sur l'écran (16).
